(19) Europäisches Patentamt
European Patent Office
Office européen des brevets

(11) EP 3 154 180 B1

(12) EUROPEAN PATENT SPECIFICATION

(45) Date of publication and mention
of the grant of the patent:
**31.07.2019   Bulletin 2019/31**

(51) Int Cl.:
*H02M 7/48* *(2007.01)*          *H02P 27/04* *(2016.01)*
*H02P 27/06* *(2006.01)*         *H02M 7/5387* *(2007.01)*
*B60W 50/16* *(2012.01)*         *H02M 7/5395* *(2006.01)*
*H02P 23/00* *(2016.01)*          *H04K 1/02* *(2006.01)*

(21) Application number: **14893802.0**

(22) Date of filing: **04.06.2014**

(86) International application number:
**PCT/JP2014/064801**

(87) International publication number:
**WO 2015/186203 (10.12.2015 Gazette 2015/49)**

(54) **POWER CONVERSION DEVICE AND CONTROL METHOD**

LEISTUNGSUMWANDLUNGSVORRICHTUNG UND STEUERUNGSVERFAHREN

DISPOSITIF DE CONVERSION DE PUISSANCE ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.04.2017   Bulletin 2017/15**

(73) Proprietor: **Hitachi Industrial Equipment Systems
Co., Ltd.
Tokyo 101-0022 (JP)**

(72) Inventor: **ARAO, Yusuke
Tokyo 101-0022 (JP)**

(74) Representative: **Mewburn Ellis LLP
City Tower
40 Basinghall Street
London EC2V 5DE (GB)**

(56) References cited:
**EP-A2- 2 278 410          JP-A- H0 491 698
JP-A- H04 285 496         JP-A- H09 322 554
JP-A- 2006 019 788        US-A1- 2008 063 208
US-A1- 2010 280 713      US-A1- 2013 320 905**

**Description**

TECHNICAL FIELD

The present invention relates to a power conversion device and a control method therefor.

BACKGROUND ART

As a background art of this technical field, JP-A-2006-19788 (Patent Literature 1) is disclosed. This literature describes that an AC power supply device 3 includes a connecting unit 31 that connects a power line to an electric device 2, a connection detecting unit 34 that determines whether or not the electric device 2 is connected, a communication unit 332 that receives from the electric device 2 authentication information indicating that the electric device 2 is a device to receive electricity from the AC power supply device 3, an authenticated device information storing unit 334 that stores the authentication information, a device authenticating portion 333 that validates the electric device 2 as an electric device that can receive electricity when the received authentication information matches the authentication information of the authenticated device information storing unit 334, a switch controlling unit 335 and an electric power supply switching unit 32 that stop the supply of electricity to the electric device 2 when the electric device 2 is not validated, and an on-off switching portion 336 that switches whether to cause the electric power supply switching unit 32 to operate (see Abstract).

EP2278410 discloses an image forming apparatus, in which a control device recognizes expansion and contraction of a pattern image based on an output of an image detector. The control device calculates a driving motor velocity fluctuation cancellation pattern for driving a common drive source. The driving motor velocity fluctuation cancellation pattern creates a latent image expansion and contraction cancellation pattern capable of canceling the expansion and contraction of the pattern image detected by the image detecting device. A process of obtaining the cancellation patterns is executed except when a print job for forming the toner image is executed in accordance with image information. The control device controls the common drive source in accordance with the cancellation driving motor pattern.

US2013/320905 discloses an electric motor drive apparatus that includes multiple inverter sections arranged corresponding to winding sets of a motor, multiple relays that controls power supplies to the inverter sections, and a control unit. Each inverter section and corresponding winding set are referred to as a system. The control unit includes an obtaining section that obtains a winding current, a determination section that determines a fault occurrence, a specifying section that specifies a faulty system in which the fault occurs, an interrupting section that controls the relay corresponding to the faulty system to interrupt the power supply to the faulty system, and a vibrating section that controls the inverter section of a properly-operating system to add a vibration to an output torque from the electric motor. The vibrating section gradually increases a vibration component of the vibration added to the output torque from the electric motor.

US2010/280713 discloses a device and a method for route guidance assistance in a vehicle that is connected to a navigation system. In order to make it easier for the driver to follow a route calculated by a navigation system, an assisting device is provided for route guidance. The assisting device includes a control unit for generating a control signal for haptic feedback to the driver of the vehicle. As haptic feedback, the control unit can output an additional moment on the steering system of the vehicle, for example, the additional moment being negative when the vehicle departs from the travel route while being positive when the vehicle follows the calculated direction of the navigation route.

US2008/063208 discloses a data communication system in which a time required for a wiretapper to decrypt an encrypted text is significantly increased so that concealment is improved. In a data transmitting apparatus, a multilevel encoding part switches a plurality of key information to generate a multilevel code sequence in which the average values of signal levels are different, and then combines the generated multilevel code sequence with information data to generate a multilevel signal having a level corresponding to the combination of the two signal levels. A light modulating part converts the multilevel signal into a modulated signal of a predetermined modulation scheme and transmits it. In a data receiving apparatus, a light demodulating part demodulates the received modulated signal into the multilevel signal. A multilevel decoding part switches a plurality of key information to generate a multilevel code sequence in which the average values of signal levels are different, and then identifies the multilevel signal based on this generated multilevel code sequence to regenerate the information data.

CITATION LIST

PATENT LITERATURE

PATENT LITERATURE 1: JP-A-2006-19788

SUMMARY OF INVENTION

TECHNICAL PROBLEM

In recent years, power conversion devices that can constantly output high frequencies with high accuracy may be diverted to unintended purposes such as military applications. As a method for preventing this, for example, by employing the scheme of Patent Literature 1, and by performing authenticating operation with a system into which a power conversion device is incorporated, it is possible to cause the power conversion device not to output if the result is not validated. However, when the scheme of Patent Literature 1 is employed, for example, in the case where the power conversion device is broken or the power conversion device is replaced, setting of the authenticating operation is needed again in any case, inevitably having a harmful effect such as taking a lot of time to resume.

Thus, the present invention has an objective to provide a power conversion device that is not unnecessarily stopped while preventing the power conversion device from being diverted to unintended purposes.

SOLUTION TO PROBLEM

According to a first aspect of the present invention there is provided a power conversion device according to claim 1.

According to a second aspect of the present invention there is provided a control method for a power conversion device according to claim 7.

ADVANTAGEOUS EFFECTS OF INVENTION

According to the present invention, it is possible to provide a power conversion device that can secure driving in a low-frequency region or with low accuracy while limiting output in a high frequency region with high accuracy, and that is not necessarily stopped while preventing the power conversion device from being diverted to unintended purposes.

Any other problem, configuration and advantageous effect will be made clear by the description of the following embodiments.

BRIEF DESCRIPTION OF DRAWINGS

FIG. 1 is a configuration diagram of a power conversion device in Embodiments 1 and 2.
FIG. 2 is a flowchart illustrating operation of an output control unit in Embodiments 1 to 3.
FIG. 3 is a diagram illustrating an example of a fluctuating component in Embodiment 1.
FIG. 4 is a diagram illustrating how a frequency control is performed in Embodiment 1.
FIG. 5 is a diagram illustrating an example of a fluctuating component in Embodiment 2.
FIG. 6 is a configuration diagram of a power conversion device in Embodiment 3.
FIG. 7 is a flowchart illustrating operation of an output control unit in Embodiment 3.
FIG. 8 illustrates data in authentication determination in Embodiment 3.

DESCRIPTION OF EMBODIMENTS

Hereinafter, embodiments will be described with reference to the drawings.

EMBODIMENT 1

In the present embodiment, an example of a frequency control that causes an output frequency to fluctuate on a random basis so as not to a predetermined accuracy or more in the case of a high frequency command.

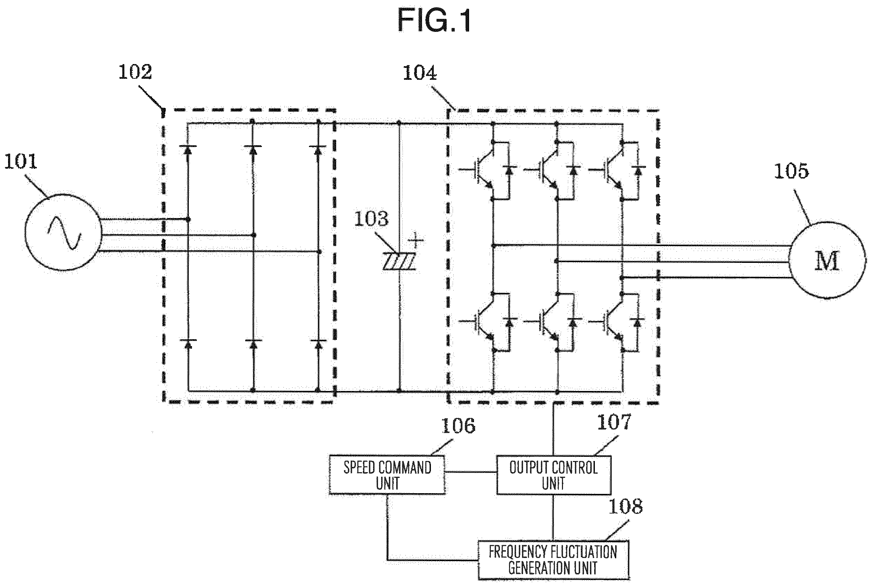

FIG. 1 is an example of a configuration diagram of a power conversion device and an AC electric motor 105 in the present embodiment, where the power conversion device includes a three-phase AC power supply 101, a DC conversion unit 102, a smoothing capacitor 103, an AC conversion unit 104, a speed command unit 106, an output control unit 107, and a frequency fluctuation generation unit 108.

The three-phase AC power supply 101 outputs, for example, three-phase AC voltage supplied from an electric power company or AC voltage supplied from a power generator, to the DC conversion unit 102. The DC conversion unit 102 is formed by, for example, a DC conversion circuit including diodes or a DC conversion circuit including an IGBT and a flywheel diode, converts the AC voltage input from the three-phase AC power supply 101 into DC voltage, and outputs the DC voltage to the smoothing capacitor 103. FIG. 1 illustrates the DC conversion unit including diodes.

The smoothing capacitor 103 smooths the DC voltage input from the DC conversion unit 102, and outputs the DC voltage to the AC conversion unit 104. For example, when the output of a power generator is DC voltage, the smoothing capacitor 103 may receive the DC voltage directly from the power generator, not via the DC conversion unit 102.

The AC conversion unit 104 is formed by, for example, an AC conversion circuit including an IGBT and a flywheel diode, receive the DC voltage from the smoothing capacitor 103, converts the DC voltage into AC voltage using a PWM output waveform input from the output control unit 107, and outputs the AC voltage to the AC electric motor 105. The power conversion device in the present embodiment is capable of performing output in a high frequency region with high accuracy, and capable of controlling a fluctuation of about 0.05% or less (e.g., a fluctuation of less than ±1 Hz in driving at 1800 Hz). The speed command unit 106 receives, for example, a target frequency value specified by a user, calculates a command frequency that increases or decreases toward the target value, and outputs the command frequency to the output control unit 107 and the frequency fluctuation generation unit 108.

The output control unit 107 receives the command frequency commanded by the speed command unit 106 and a fluctuating frequency (fluctuating command) output by the frequency fluctuation generation unit 108, as inputs, and outputs the PWM output waveform that is calculated using the calculated command frequency, to the power conversion unit 104.

The frequency fluctuation generation unit 108 receives the command frequency commanded by the speed command unit 106, calculates, for example, data that increases or decreases on a random basis, adjusts the value of the data such that the calculated width thereof becomes, for example, ±0.1% of a command frequency specified in regulations or the like, and outputs the value to the output control unit 107.

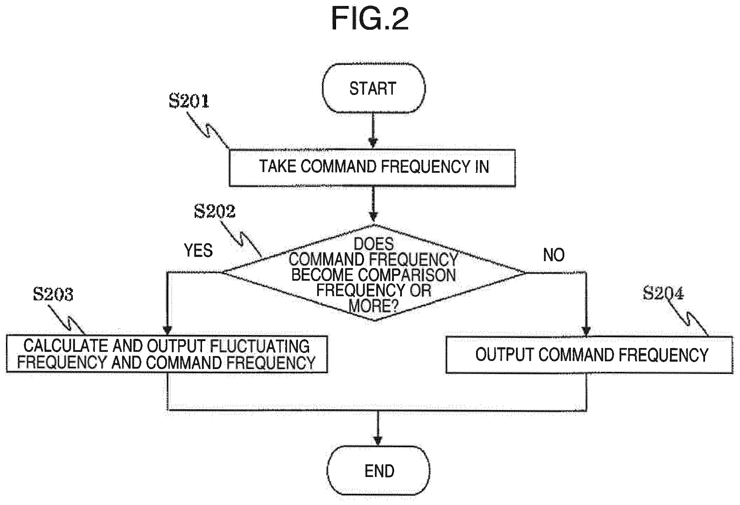

FIG. 2 illustrates processing when the output control unit 107 calculates a frequency command value. First, the output control unit 107 takes in the command frequency commanded by the speed command unit 106, as an input (S201). The output control unit 107 compares the command frequency with a predetermined comparison frequency (600 Hz) (S202), performs calculation on the fluctuating frequency output from the frequency fluctuation generation unit 108 and the command frequency, when the command frequency is the comparison frequency or more, and calculates an output voltage using the calculated command frequency (S203). Note that the meaning of the calculation of the output voltage does not change if the calculation of the fluctuating frequency is performed after the calculation based on the command frequency. When the command frequency is less than the comparison frequency, the output control unit 107 calculates the output voltage from only the command frequency, not taking the fluctuating frequency into consideration (S204).

The flow of FIG. 2 executed in the speed command unit 106, the output control unit 107, and the frequency fluctuation generation unit 108 is implemented by writing a program into a microcontroller. In order to prevent unintended diversion by a third party, it is effective to protect the above flow to disable rewriting the program. For example, the protection of the program can be achieved by physical destruction such as snapping off pins of a writing board of the microcontroller to physically disable writing.

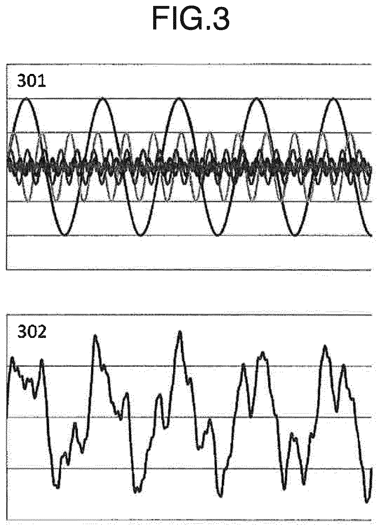

FIG. 3 is a diagram illustrating an example of fluctuating frequency data calculated by the frequency fluctuation generation unit 108. Waveforms illustrated in (301) of FIG. 3 are the depiction of a plurality of sine waves that are calculated with different amplitudes and frequencies. A waveform illustrated in (302) is the result of superposing all the waveforms illustrated in (301). The waveform illustrated in (302) is a waveform similar to 1/f fluctuation, which is also seen in the natural world, and is obtained by the following expression, for example.

[MATH. 1]

$$Fratio = \sin(\omega t) + \frac{1}{2}\sin(2\omega tX) + \frac{1}{4}\sin(4\omega tY) + \frac{1}{8}\sin(8\omega tZ) + \frac{1}{16}\sin(16\omega tW) \quad \text{(MATH. 1)}$$

Fratio: fluctuating frequency ratio, ω: angular frequency, t: time, and X, Y, Z, W: gain.

The graph (301) of FIG. 3 illustrates individual terms of (MATH. 1) separately, and the graph (302) illustrates Fratio that is the result of (MATH. 1). In (MATH. 1), each angular frequency is multiplied by a gain so as not to bring about a waveform that has a certain periodic fluctuation. In addition, (MATH. 1) factors in the terms up to fifth-order, but if another term is added or a certain term is deleted, the meaning does not change as long as the fluctuating component is almost on a random basis. In addition, each term (MATH. 1) is not necessarily multiplied by fixed a value of some power of 2 but may be multiplied by any coefficient.

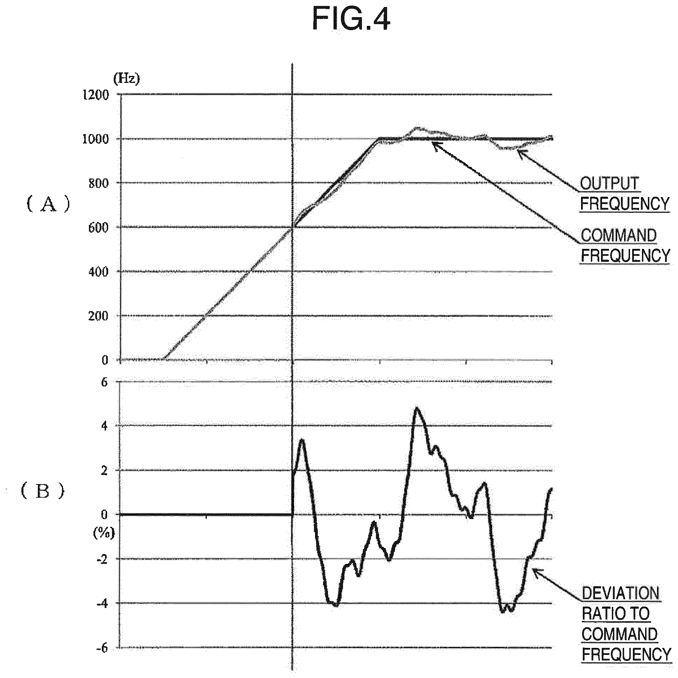

FIG. 4 is a diagram illustrating the temporal changes of the command frequency output from the speed command unit 106 and the output frequency obtained by output control unit 107 performing calculation of the fluctuating frequency (fluctuating command) on the command frequency. FIG. 4(A) illustrates how the command frequency and the output frequency change when the power conversion device gradually accelerates the AC electric motor 105 toward the target frequency set at 1000 Hz. In addition, FIG. 4(B) illustrates how the output control unit 107 fluctuates the frequency when the command frequency exceeds 600 Hz.

The output frequency calculated by the output control unit 107 is expressed by, for example, the following expression.

[MATH. 2]

$$Fout = Fcommand \times (1 + Fratio \times G) \qquad (MATH. 2)$$

Fout: output frequency, Fcommand: command frequency, Fratio: coefficient obtained by MATH. 1, G: fluctuation rate.

A deviation ratio to the command frequency illustrated in FIG. 4(B) refers to Fratio × G (as an example, G = 3%) in (MATH. 2). The output control unit 107 generates a PWM output waveform using an output frequency Fout having been calculated, to control the power conversion unit.

Since standard induction motors are driven at 50/60 Hz, it is often the case where driving up to 100 Hz may be performed with high accuracy. Therefore, although the comparison frequency is set at 600 Hz in the present embodiment, some frequency from 100 Hz to 600 Hz may be set as comparison frequency when it comes to practical use.

EMBODIMENT 2

In the present embodiment, components common to those in Embodiment 1 will be denoted by like reference numerals, and components different from those in Embodiment 1 will be described in detail. The configuration is the same as that of FIG. 1 described in Embodiment 1. In the present embodiment, another example of fluctuating frequency data calculated by the frequency fluctuation generation unit 108.

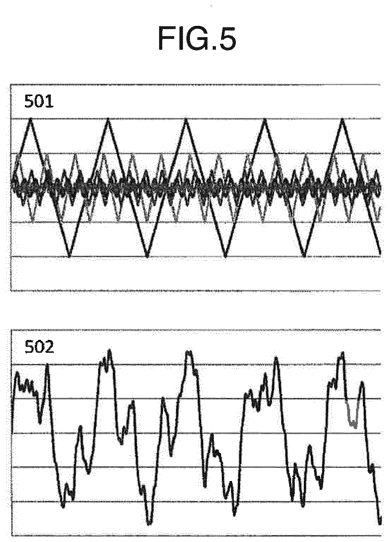

FIG. 5 is a diagram illustrating an example of fluctuating frequency data calculated by the frequency fluctuation generation unit 108. Waveforms illustrated in (501) of FIG. 5 are the depiction of a plurality of triangular waves that are calculated with different amplitudes and frequencies. A waveform illustrated in (502) is the result of superposing all the waveforms illustrated in (501). The waveform illustrated in (502) is a waveform similar to 1/f fluctuation, which is also seen in the natural world, and the triangular waves are generated by performing simple additions or subtractions on a count. In FIG. 5, when the additions or subtractions for the triangular waves are performed, the widths of the additions or subtractions for each triangular wave are made different from one another to change the inclinations of the triangular waves, so as not to bring about waveform that has a certain periodic fluctuation. Using the triangular waves has an advantage of reducing the load of calculation as compared with the case of using sine waves.

The frequency fluctuation generation unit 108 outputs the fluctuating frequency calculated as illustrated in FIG. 5, to the output control unit 107.

EMBODIMENT 3

In the present embodiment, components common to those in Embodiment 1 will be denoted by like reference numerals, and components different from those in Embodiment 1 will be described in detail.

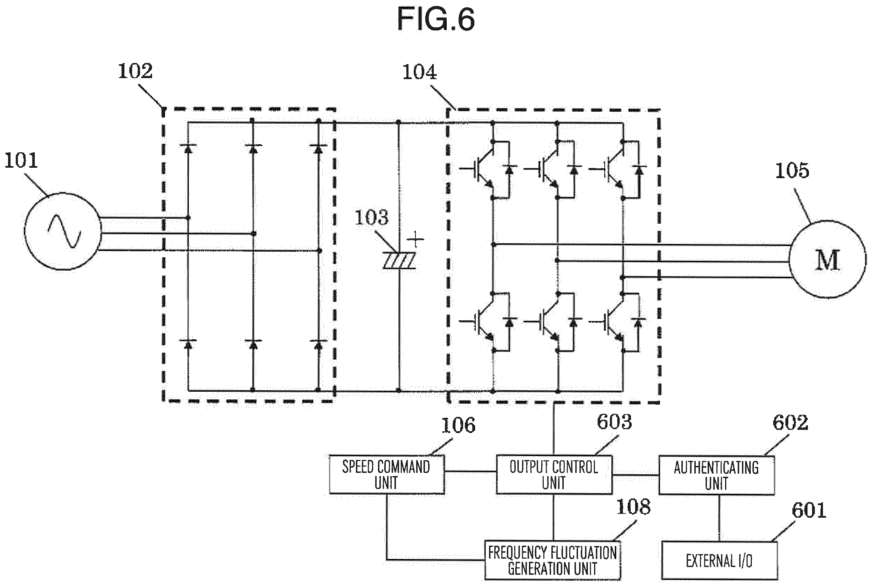

FIG. 6 illustrates an example of the configuration diagram of a power conversion device and an AC electric motor 105 in the present embodiment. An external I/O 601 is formed by a user interface such as a circuit terminal and a communication terminal, exchanges signals with a device that is externally connected, and outputs the resultant signal to an authenticating unit 602. The authenticating unit 602 receives information output from the external I/O 601, as an input, verifies the information using a predetermined authenticating method, and outputs the verification result to an output control unit 603.

The output control unit 603 receives the authentication result input from the authenticating unit 602, a command frequency commanded from the speed command unit 106, and a fluctuating frequency output by the frequency fluctuation generation unit 108, as inputs, and outputs a PWM output waveform that is calculated using the calculated command frequency, to the power conversion unit 104.

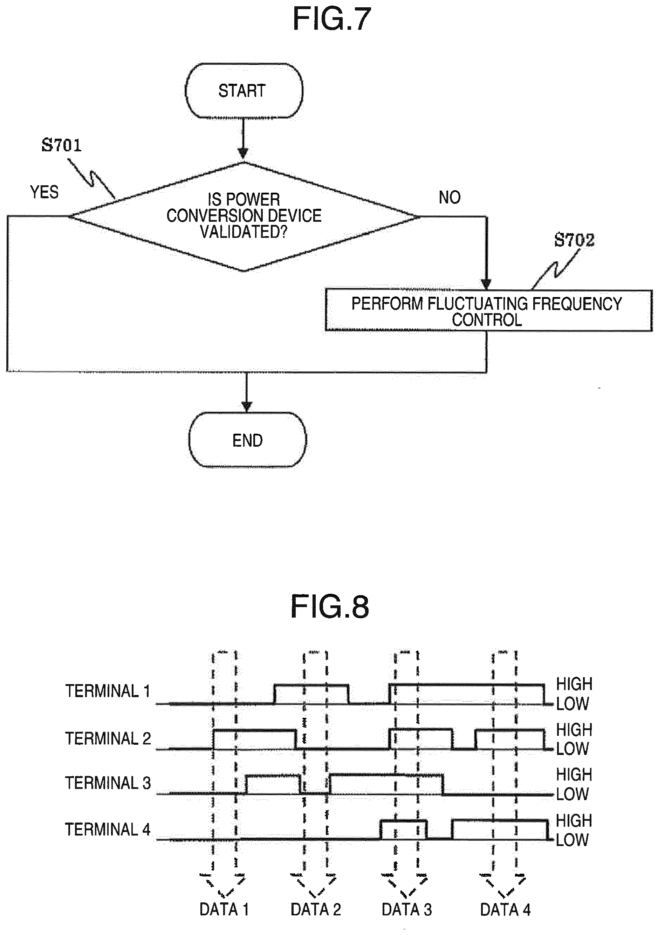

FIG. 7 illustrates processing of authentication determination by the output control unit 603. First, the output control unit 603 determines the verification result output from the authenticating unit 602, to determine whether the power conversion device has been validated (S701). If the power conversion device has not been validated, the fluctuating frequency control illustrated in FIG. 2 (S203) described in Embodiment 1 is performed (S702). If the power conversion device has been validated, fluctuating the frequency precision is not needed, and thus the output voltage is calculated only from command frequency, not taking the fluctuating frequency (fluctuating command) into consideration.

FIG. 8 illustrates an example in which the authenticating unit 602 performs the validation. FIG. 8 illustrates input High/Low signals in terms of the relation between data and time, assuming that the external I/O 601 includes input terminals 1 to 4. In FIG. 8, a data item is taken in at regular time intervals triggered by, for example, an input of the terminal 2. The authenticating unit 602 arranges Highs/Lows at the terminals in the form of the states of the terminals 4, 3, 2, and 1, as data 1 of FIG. 8, which is 0010 in a binary expression, or 2 as the converted into a hexadecimal number. The authenticating unit 602 similarly takes data items in, in the form of, for example, 21FB, which is a value of hexadecimal number obtained by arranging the data items from 1 to 4. If these data items match a predetermined data items, the result of having been authenticated is output to the output control unit 603. This validation may be performed whenever power is turned on, or if once validated, the result of having been authenticated may be stored in an internal memory or the like. In addition, the authenticating unit 602 may perform the validation by performing validation under an encryption key system or verifying a user privilege given under license management, using various signals input from the external I/O 601, for example, inputs under a typical communications system.

Furthermore, the present embodiment is configured to perform the fluctuating frequency control (S702) if not validated. The fluctuating frequency control of this case may be to calculate the fluctuating frequency to calculate the output frequency only if the command frequency become the comparison frequency or more as in Embodiment 1, or to calculate the fluctuating frequency over the whole frequency range regardless of the value of the command frequency to calculate the output frequency. In the case of the power conversion device performing the latter control, the use of the power conversion device can be continued without the validation if purposes thereof do not require high accuracy control over the whole frequency range.

Note that the present invention is not limited to the above embodiments, and includes various modified examples. Further variations and modifications are possible within the scope of the appended claims.

A part or all of the above configurations, functions, processing units, and processing methods, and the like may be implemented in the form of hardware by designing an integrated circuit, for example. The above configurations, functions, and the like may be implemented in the form of software by a processor interpreting and executing programs that implement the functions. Information such as programs, tables, and files that implement the functions may be stored in a recording device such as a memory, hard disk, and solid state drive (SSD), or a recording medium such as an IC card, SD card, and DVD.

Furthermore, the control lines and the information lines are illustrated as those considered to be required for description, and not all the control lines and information lines of the product are illustrated. It may be considered that almost all the configurations are actually in mutual connection with one another.

REFERENCE SIGNS LIST

| | |
|---|---|
| 101 | three-phase AC voltage |
| 102 | DC conversion unit |
| 103 | smoothing capacitor |
| 104 | AC conversion unit |
| 105 | AC electric motor |
| 106 | speed command unit |
| 107 | output control unit |
| 108 | frequency fluctuation generation unit |
| 601 | external I/O |
| 602 | authenticating unit |
| 603 | output control unit |

**Claims**

1. A power conversion device comprising:

   a DC voltage unit (103) that is configured to smooth DC voltage;
   a power conversion unit (104) that is configured to convert the DC voltage into AC voltage;
   an output control unit (107) that is configured to control an output of the power conversion unit (104); and
   a frequency command unit (106) that is configured to output a command frequency to the output control unit (107), wherein
   when a command frequency output by the frequency command unit (106) becomes a predetermined frequency or more, the output control unit (107) controls the power conversion unit (104), determining a frequency obtained by fluctuating the command frequency as an output frequency;

wherein the output control unit (107) controls the power conversion unit (104) based on the command frequency when the command frequency is less than the predetermined frequency;

wherein the power conversion device further comprises a frequency fluctuation generation unit (108) that is configured to superpose a plurality of waveforms having different periods to generate a fluctuating command of a predetermined fluctuating range or more, and wherein

the frequency obtained by fluctuating the command frequency is generated by calculating the command frequency and the fluctuating command.

2. The power conversion device according to claim 1, wherein the frequency fluctuation generation unit (108) is configured to set a range of frequency fluctuation at ±0.1% or more of the command frequency.

3. The power conversion device according to claim 1, wherein the predetermined frequency is set within a range from 100 Hz to 600 Hz.

4. The power conversion device according to claim 1, further comprising
an authenticating unit (602) that is configured to receive a signal or an input from outside to perform validation, wherein when the validation is performed by the authenticating unit (602) using a predetermined authenticating method, the output control unit (107) controls the power conversion unit (104) based on the command frequency even when a command frequency output by the frequency command unit (106) becomes the predetermined frequency or more.

5. The power conversion device according to claim 4, further comprising
an external I/O (601) that is connected to the authenticating unit (602) and is configured to receive the signal or the input from the outside, wherein
the external I/O (601) is formed by a plurality of terminals (1-4), and the authenticating unit (602) is configured to perform the validation based on changes in signals input into the plurality of terminals (1-4).

6. The power conversion device according to claim 1, wherein the output control unit (107) is implemented by writing a program into a microcontroller provided in the power conversion device (104), and after writing the program, a writing board of the microcontroller is physically disabled to rewrite a program.

7. A control method for a power conversion device comprising a DC voltage unit (103) that smooths DC voltage, a power conversion unit (104) that converts the DC voltage into AC voltage, and an output control unit (107) that controls an output of the power conversion unit (104) based on a command frequency, the control method comprising the steps of:

controlling, when the command frequency becomes a predetermined frequency or more, the power conversion unit (104), determining a frequency obtained by fluctuating the command frequency as an output frequency; and
controlling, when the command frequency is less than the predetermined frequency, the power conversion unit (104), determining the command frequency as the output frequency;
wherein the method further comprises the step of superposing a plurality of waveforms having different periods to generate a fluctuating command of a predetermined fluctuating range or more, wherein the frequency obtained by fluctuating the command frequency is generated by calculating the command frequency and the fluctuating command.

8. The control method for a power conversion device according to claim 7, wherein the frequency obtained by fluctuating the command frequency is a frequency calculated from the command frequency and a fluctuating command of a predetermined fluctuating range or more that is obtained by superposing a plurality of waveforms having different periods.

9. The control method for a power conversion device according to claim 7, wherein the predetermined frequency is set within a range from 100 Hz to 600 Hz.

10. The control method for a power conversion device according to claim 7, wherein
a signal or an input is received from outside, and
when validation is performed based on the received signal or input using a predetermined authenticating method, the power conversion unit (104) is controlled determining the command frequency as the output frequency even when the command frequency becomes the predetermined frequency or more.

**Patentansprüche**

1. Leistungswandlervorrichtung, umfassend:

   eine Gleichspannungseinheit (103), die konfiguriert ist, um Gleichspannung zu glätten;
   eine Leistungswandlereinheit (104), die konfiguriert ist, um die Gleichspannung in Wechselspannung umzuwandeln;
   eine Ausgabesteuereinheit (107), die konfiguriert, um eine Ausgabe der Leistungswandlereinheit (104) zu steuern; und
   eine Frequenzbefehlseinheit (106), die konfiguriert ist, um eine Befehlsfrequenz an die Ausgabesteuereinheit (107) auszugeben, wobei
   wenn eine Befehlsfrequenzausgabe durch die Frequenzbefehlseinheit (106) eine vorbestimmte Frequenz erreicht oder höher wird, die Ausgabesteuereinheit (107) die Leistungswandlereinheit (104) steuert, wobei eine Frequenz festgelegt wird, die durch Fluktuierenlassen der Befehlsfrequenz als Ausgabefrequenz erhalten wird;
   wobei die Ausgabesteuereinheit (107) die Leistungswandlereinheit (104) basierend auf der Befehlsfrequenz steuert, wenn die Befehlsfrequenz niedriger als die vorbestimmte Frequenz ist;
   wobei die Leistungswandlervorrichtung weiters eine Frequenzfluktuationserzeugungseinheit (108) umfasst, die konfiguriert ist, um eine Vielzahl von Wellenformen, die unterschiedliche Periodendauern aufweisen, zu überlagern, um einen Fluktuationsbefehl eines vorbestimmten Fluktuationsbereichs oder mehr zu erzeugen, und wobei
   die durch Fluktuierenlassen der Befehlsfrequenz erhaltene Frequenz durch Berechnen der Befehlsfrequenz und des Fluktuationsbefehls erhalten wird.

2. Leistungswandlervorrichtung nach Anspruch 1, wobei die Frequenzfluktuationserzeugungseinheit (108) konfiguriert ist, um einen Bereich von Frequenzfluktuation bei ±0,1 % oder mehr der Befehlsfrequenz einzustellen.

3. Leistungswandlervorrichtung nach Anspruch 1, wobei die vorbestimmte Frequenz in einem Bereich von 100 bis 600 Hz eingestellt ist.

4. Leistungswandlervorrichtung nach Anspruch 1, weiters umfassend
   eine Authentifizierungseinheit (602), die konfiguriert ist, um ein Signal oder eine Eingabe von außen zu empfangen, um Validierung durchzuführen, wobei
   wenn die Validierung durch die Authentifizierungseinheit (602) unter Verwendung eines vorbestimmten Authentifizierungsverfahrens durchgeführt wird, die Ausgabesteuereinheit (107) die Leistungwandlereinheit (104) basierend auf der Befehlsfrequenz steuert, auch wenn eine Befehlsfrequenzausgabe durch die Frequenzbefehlseinheit (106) die vorbestimmte Frequenz erreicht oder höher wird.

5. Leistungswandlervorrichtung nach Anspruch 4, weiters umfassend
   eine externe I/O (601), die mit der Authentifizierungseinheit (602) verbunden ist und konfiguriert ist, um das Signal oder die Eingabe von außen zu empfangen, wobei
   die externe I/O (601) durch eine Vielzahl von Endgeräten (1-4) gebildet ist und die Authentifizierungseinheit (602) konfiguriert ist, um die Validierung basierend auf Änderungen von Signalen durchzuführen, die in die Vielzahl von Endgeräten (1-4) eingegeben werden.

6. Leistungswandlervorrichtung nach Anspruch 1, wobei die Ausgabesteuereinheit (107) durch Schreiben eines Programms in einen Microcontroller implementiert wird, der in der Leistungswandlereinheit (104) bereitgestellt ist, und nach dem Schreiben des Programms eine Schreibplatine des Microcontrollers physikalisch deaktiviert wird, um ein Programm umzuschreiben.

7. Steuerverfahren für eine Leistungswandlervorrichtung, umfassend eine Gleichspannungseinheit (103), die Gleichspannung glättet, eine Leistungswandlereinheit (104), die die Gleichspannung in Wechselspannung umwandelt, und eine Ausgabesteuereinheit (107), die eine Ausgabe der Leistungswandlereinheit (104) basierend auf einer Befehlsfrequenz steuert, wobei das Steuerverfahren die folgenden Schritte umfasst:

   wenn die Befehlsfrequenz eine vorbestimmte Frequenz erreicht oder höher wird, Steuern der Leistungswandlereinheit (104), Festlegen einer Frequenz, die durch Fluktuierenlassen der Befehlsfrequenz als Ausgabefrequenz erhalten wird; und
   wenn die Befehlsfrequenz niedriger als die vorbestimmte Frequenz ist, Steuern der Leistungswandlereinheit (104), Festlegen der Befehlsfrequenz als die Ausgabefrequenz;

wobei das Verfahren weiters den Schritt des Überlagerns einer Vielzahl von Wellenformen, die unterschiedliche Periodendauern aufweisen, umfasst, um einen Fluktuationsbefehl eines vorbestimmten Fluktuationsbereichs oder mehr zu erzeugen, wobei die durch Fluktuierenlassen der Befehlsfrequenz erhaltene Frequenz durch Berechnen der Befehlsfrequenz und des Fluktuationsbefehls erzeugt wird.

8. Steuerverfahren für eine Leistungswandlervorrichtung nach Anspruch 7, wobei die durch Fluktuierenlassen der Befehlsfrequenz erhaltene Frequenz eine Frequenz ist, die aus der Befehlsfrequenz und einem Fluktuationsbefehl eines vorbestimmten Fluktuationsbereichs oder mehr berechnet wird, der durch Überlagern einer Vielzahl von Wellenformen, die unterschiedliche Periodendauern aufweisen, erhalten wird.

9. Steuerverfahren für eine Leistungswandlervorrichtung nach Anspruch 7, wobei die vorbestimmte Frequenz innerhalb eines Bereichs von 100 bis 600 Hz eingestellt wird.

10. Steuerverfahren für eine Leistungswandlervorrichtung nach Anspruch 7, wobei

ein Signal oder eine Eingabe von außen empfangen wird und

wenn Validierung basierend auf dem/der empfangenen Signal oder Eingabe unter Verwendung eines vorbestimmten Authentifizierungsverfahrens durchgeführt wird, die Leistungswandlereinheit (104) gesteuert wird, wobei die Befehlsfrequenz als die Ausgabefrequenz festgelegt wird, auch wenn die Befehlsfrequenz die vorbestimmte Frequenz erreicht oder höher wird.

## Revendications

1. Dispositif de conversion de puissance comprenant :

une unité de tension continue (103) qui est configurée de manière à lisser une tension continue ;

une unité de conversion de puissance (104) qui est configurée de manière à convertir la tension continue en tension alternative ;

une unité de commande de sortie (107) qui est configurée de manière à commander une sortie de l'unité de conversion de puissance (104) ; et

une unité de commande de fréquence (106) qui est configurée de manière à fournir en sortie une fréquence de commande à l'unité de commande de sortie (107), dans lequel

lorsqu'une fréquence de commande fournie en sortie par l'unité de commande de fréquence (106) devient une fréquence prédéterminée ou une fréquence supérieure à celle-ci, l'unité de commande de sortie (107) commande l'unité de conversion de puissance (104), ce qui permet de déterminer une fréquence obtenue en faisant fluctuer la fréquence de commande en tant qu'une fréquence de sortie ;

dans lequel l'unité de commande de sortie (107) commande l'unité de conversion de puissance (104) sur la base de la fréquence de commande, lorsque la fréquence de commande est inférieure à la fréquence prédéterminée ;

dans lequel le dispositif de conversion de puissance comprend en outre une unité de génération de fluctuation de fréquence (108) qui est configurée de manière à superposer une pluralité de formes d'onde présentant différentes périodes pour générer une commande fluctuante d'une plage fluctuante prédéterminée ou plus, et dans lequel

la fréquence obtenue en faisant fluctuer la fréquence de commande est générée en calculant la fréquence de commande et la commande fluctuante.

2. Dispositif de conversion de puissance selon la revendication 1, dans lequel l'unité de génération de fluctuation de fréquence (108) est configurée de manière à régler une plage de fluctuation de fréquence à $\pm$ 0,1 % ou plus de la fréquence de commande.

3. Dispositif de conversion de puissance selon la revendication 1, dans lequel la fréquence prédéterminée est réglée sur une plage allant de 100 Hz à 600 Hz.

4. Dispositif de conversion de puissance selon la revendication 1, comprenant en outre :

une unité d'authentification (602) qui est configurée de manière à recevoir un signal ou une entrée provenant de l'extérieur, en vue de mettre en oeuvre une validation, dans lequel

lorsque la validation est mise en oeuvre par l'unité d'authentification (602) en utilisant un procédé d'authentification prédéterminé, l'unité de commande de sortie (107) commande l'unité de conversion de puissance (104) sur la base de la fréquence de commande, y compris lorsqu'une fréquence de commande fournie en sortie par l'unité de commande de fréquence (106) devient la fréquence prédéterminée ou une fréquence supérieure à celle-ci.

5. Dispositif de conversion de puissance selon la revendication 4, comprenant en outre :

une entrée/sortie, I/O, externe (601) qui est connectée à l'unité d'authentification (602) et est configurée de manière à recevoir le signal ou l'entrée provenant de l'extérieur, dans lequel
l'entrée/sortie externe (601) est formée par une pluralité de bornes (1-4), et l'unité d'authentification (602) est configurée de manière à mettre en oeuvre la validation sur la base de changements dans les signaux appliqués en entrée dans la pluralité de bornes (1-4).

6. Dispositif de conversion de puissance selon la revendication 1, dans lequel l'unité de commande de sortie (107) est mise en oeuvre en écrivant un programme dans un microcontrôleur fourni dans le dispositif de conversion de puissance (104), et dans lequel, une fois le programme écrit, une carte d'écriture du microcontrôleur est physiquement désactivée en vue de réécrire un programme.

7. Procédé de commande pour un dispositif de conversion de puissance comprenant une unité de tension continue (103) qui lisse une tension continue, une unité de conversion de puissance (104) qui convertit la tension continue en tension alternative, et une unité de commande de sortie (107) qui commande une sortie de l'unité de conversion de puissance (104) sur la base d'une fréquence de commande, le procédé de commande comprenant les étapes ci-dessous consistant à :

commander, lorsque la fréquence de commande devient une fréquence prédéterminée ou une fréquence supérieure à celle-ci, l'unité de conversion de puissance (104), ce qui permet de déterminer une fréquence obtenue en faisant fluctuer la fréquence de commande en tant qu'une fréquence de sortie ; et
commander, lorsque la fréquence de commande est inférieure à la fréquence prédéterminée, l'unité de conversion de puissance (104), ce qui permet de déterminer la fréquence de commande en tant que la fréquence de sortie ;
dans lequel le procédé comprend en outre l'étape consistant à superposer une pluralité de formes d'onde présentant différentes périodes pour générer une commande fluctuante d'une plage fluctuante prédéterminée ou plus, dans lequel la fréquence obtenue en faisant fluctuer la fréquence de commande est générée en calculant la fréquence de commande et la commande fluctuante.

8. Procédé de commande pour un dispositif de conversion de puissance selon la revendication 7, dans lequel la fréquence obtenue en faisant fluctuer la fréquence de commande est une fréquence calculée à partir de la fréquence de commande et d'une commande fluctuante d'une plage fluctuante prédéterminée ou plus qui est obtenue en superposant une pluralité de formes d'onde présentant différentes périodes.

9. Procédé de commande pour un dispositif de conversion de puissance selon la revendication 7, dans lequel la fréquence prédéterminée est réglée sur une plage allant de 100 Hz à 600 Hz.

10. Procédé de commande pour un dispositif de conversion de puissance selon la revendication 7, dans lequel
un signal ou une entrée est reçu (e) en provenance de l'extérieur ; et
lorsqu'une validation est mise en oeuvre sur la base du signal reçu ou de l'entrée reçue, en utilisant un procédé d'authentification prédéterminé, l'unité de conversion de puissance (104) est commandée, ce qui permet de déterminer la fréquence de commande en tant que la fréquence de sortie, y compris lorsque la fréquence de commande devient la fréquence prédéterminée ou une fréquence supérieure à celle-ci.

# FIG.1

102

104

101

103

105

M

106

107

SPEED COMMAND UNIT

OUTPUT CONTROL UNIT

108

FREQUENCY FLUCTUATION GENERATION UNIT

# FIG.2

START

S201 → TAKE COMMAND FREQUENCY IN

S202 → DOES COMMAND FREQUENCY BECOME COMPARISON FREQUENCY OR MORE?

YES

NO

S203 → CALCULATE AND OUTPUT FLUCTUATING FREQUENCY AND COMMAND FREQUENCY

S204 → OUTPUT COMMAND FREQUENCY

END

EP 3 154 180 B1

# FIG.3

# FIG.4

(A)

(B)

OUTPUT FREQUENCY

COMMAND FREQUENCY

DEVIATION RATIO TO COMMAND FREQUENCY

# FIG.5

# FIG.6

EP 3 154 180 B1

# FIG.7

START

S701

YES ← IS POWER CONVERSION DEVICE VALIDATED? → NO

S702

PERFORM FLUCTUATING FREQUENCY CONTROL

END

# FIG.8

| | | HIGH |
| TERMINAL 1 | | LOW |
| TERMINAL 2 | | HIGH LOW |
| TERMINAL 3 | | HIGH LOW |
| TERMINAL 4 | | HIGH LOW |

DATA 1    DATA 2    DATA 3    DATA 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006019788 A
- EP 2278410 A
- US 2013320905 A
- US 2010280713 A
- US 2008063208 A